# EUROPÄISCHE PATENTANMELDUNG

(11) **EP 1 329 833 A2**
(43) Veröffentlichungstag der Anmeldung: **23.07.2003**
(21) Anmeldenummer: 03000598.7
(22) Anmeldetag: 14.01.2003
(51) Int. Cl.: G06F 17/60

(54) **Internet-gestütztes Nachrichtenübertragungsverfahren und Anordnung zu dessen Durchführung**

(30) Priorität: 15.01.2002 DE 10201286
(71) Anmelder: Tenovis GmbH & Co. KG, 60326 Frankfurt am Main (DE)
(72) Erfinder: Richter, Jörg, 60386 Frankfurt (DE)
(74) Vertreter: Heinze, Ekkehard, Dipl.-Phys. Dr.

(57) **Zusammenfassung**

Internet-gestütztes Nachrichtenübertragungsverfahren zur Übermittlung einer Bestell- oder Buchungsnachricht von einem Besteller-Endgerät eines Bestellers an ein Anbieter-Endgerät eines ersten Anbieters einer Ware oder Dienstleistung, der keine eigene Internetseite unterhält, in einem Kommunikationsnetz, wobei der erste Anbieter eine Internetseite eines zweiten Anbieters eines Kommunikationsdienstes als Bestellplattform nutzt, indem er dort ein virtuelles Bestellformular und wahlweise Zusatzinformationen offeriert, der Besteller vom Besteller-Endgerät aus das Bestellformular aufruft, ausfüllt und abschickt, ein das ausgefüllte Bestellformular repräsentierender Bestelldatensatz von einem Netzserver des zweiten Anbieters mittelbar oder unmittelbar an das Anbieter-Endgerät übermittelt und am Anbieter-Endgerät die Bestell- oder Buchungsnachricht aus dem Bestelldatensatz erzeugt und ausgegeben wird.

## Beschreibung

Die Erfindung betrifft ein Internet-gestütztes Nachrichtenübertragungsverfahren zur Übermittlung einer Bestell- oder Buchungsnachricht von einem Besteller-Endgerät eines Bestellers an ein Anbieter-Endgerät eines Anbieters einer Ware oder Dienstleistung, der keine eigene Internetseite unterhält. Sie betrifft weiter eine Anordnung zur Durchführung dieses Verfahrens.

Die immer intensivere Nutzung des Internet als Informationsund Kommunikationsbasis durch breite Bevölkerungsschichten in den Industrieländern hat das wirtschaftliche und soziale Leben tiefgreifend verändert. Im Zuge dieser Entwicklung haben Handelsplattformen im Internet erheblich an Bedeutung gewonnen. Diese Tendenz wird noch verstärkt durch die fortschreitende Integration mit den Mobilfunknetzen, die bereits mit der Etablierung des WAP-Standards bis zu einem gewissen Grade gelungen ist und mit Einführung des UMTS (Universal Mobile Telecommunication System) einen Qualitätssprung erfahren wird.

Die Implementierung und der Betrieb einer eigenen Handelsplattform im Internet sind jedoch nicht für alle Anbieter von Waren oder Dienstleistungen lohnend. Der wirtschaftliche Nutzeffekt eines eigenen Internetauftritts hängt neben der Ausrichtung der wirtschaftlichen Aktivitäten und dem Angebotsprofil des Unternehmens auch von dessen Größe, Geschichte, geografischer Lage, personeller Besetzung und weiteren Faktoren ab. Speziell sehr kleine Unternehmen, deren Angebot traditionell weniger aus dem Heim- und Bürobereich, sondern mehr von sogenannter Laufkundschaft angefragt wird, sind daher mit einem eigenen Internetauftritt eher zurückhaltend. Dies kann jedoch dazu führen, daß sie Marktchancen verpassen und gegenüber Wettbewerbern ins Hintertreffen geraten.

Der Erfindung liegt daher die Aufgabe zugrunde, ein Internetgestützes Bestell- oder Buchungssystem für Kleinunternehmen, Vereine, Organisationen etc. bereitzustellen, welches diesen die Nutzung der Chancen des Internet mit geringem Aufwand ermöglicht.

Diese Aufgabe wird in ihrem Verfahrensaspekt durch ein Nachrichtenübertragungsverfahren mit den Merkmalen des Anspruchs 1 und in ihrem Vorrichtungsaspekt durch eine Nachrichtenübertragungsanordnung mit den Merkmalen des Anspruchs 8 gelöst.

Die Erfindung schließt den Gedanken ein, einem Anbieter von Waren oder Dienstleistungen, der seinen Kunden eine Bestellung bzw. Buchung auch über das Internet ermöglichen will (nachfolgend: erster Anbieter), seitens eines Kommunikationsdienst-Anbieters (nachfolgend auch: zweiter Anbieter) die gewünschte Internetpräsenz zur Verfügung zu stellen. Der zweite Anbieter bietet im Rahmen seines eigenen Internetauftritts (Web-Portals) dem ersten Anbieter eine Bestellplattform an, wo dieser ein Bestellformular für bestimmte Waren oder Dienstleistungen und gegebenenfalls Zusatzinformationen zu seinem Unternehmen bzw. Angebot offeriert.

Ein Kunde des ersten Anbieters kann das Bestellformular auf einfache Weise ausfüllen und "per Mausklick" an den ersten Anbieter abschicken. Der entsprechende Bestelldatensatz gelangt vom Web-Server des zweiten Anbieters - direkt oder mittelbar über einen Unified Messaging Server - zu einem geeignet ausgewählten Endgerät beim ersten Anbieter, wo die Bestell- bzw. Buchungsnachricht in einer auf die Betriebsführung des ersten Anbieters zugeschnittenen Weise ausgegeben wird.

Unter Anordnungs-Gesichtspunkten basiert die Erfindung also auf dem Vorhandensein eines Endgerätes beim Besteller (nachfolgend: Besteller-Endgerät) sowie beim ersten Anbieter (nachfolgend: Anbieter-Endgerät) sowie eines Web-Servers beim zweiten Anbieter bzw. eines von diesem gemeinsam mit anderen genutzten Web-Servers. Dieser ist speziell zur Implementierung der erwähnten Bestellplattform, insbesondere zur Bereitstellung des virtuellen Bestellformulars und wahlweise von Zusatzinformationen seitens des ersten Anbieters, ausgebildet. Die Aufwendungen zur Bereitstellung dieser Mittel liegen also beim zweiten Anbieter, so daß der erste Anbieter für seinen Internetauftritt praktisch keine Startinvestitionen hat. In einer kommerziellen Realisierung der Erfindung wird er allerdings - jedenfalls nach Ablauf einer bestimmten Start- und Probephase - Bereitstellungs- bzw. Nutzungsgebühren an den zweiten Anbieter zahlen.

In einer ersten bevorzugten Ausführung des vorgeschlagenen Systems wird der Bestelldatensatz im HTML-, XML- oder WML-Format an einen Unified-Messaging-Server übertragen, durch diesen in eine Faxnachricht umgewandelt und an einem als Anbieter-Endgerät dienenden Faxgerät ausgegeben. Diese Ausführung berücksichtigt im besonderen Maße die üblicherweise vorhandene Kommunikations-Infrastruktur sowie Art und Weise der Auftragsabwicklung von traditionell arbeitenden Kleinunternehmen. Die als Fax eingehende Bestell- bzw. Buchungsnachricht liegt unmittelbar in Schriftform vor und kann "von Hand" verschiedenen herkömmlichen Bearbeitungsschritten unterzogen werden. Der Besteller dagegen nutzt die Möglichkeit seines modernen Daten- oder TK-Endgerätes in der ihm vertrauten Weise. Bei seinem Endgerät kann es sich um einen PC bzw. Laptop oder auch einen Handheld-PC bzw. PDA (Personal Digital Assistant mit Festnetz-Internetanschluß) oder auch ein WAP-fähiges Mobilfunk-Endgerät handeln.

In einer stärker zukunftsorientierten alternativen Ausführung des Bestellsystems wird das Bestellformular im WML-Format an einem als Besteller-Endgerät dienenden ersten Mobilfunk-Endgerät bereitgestellt, ausgefüllt und abgeschickt und zu einem als Anbieter-Endgerät dienenden zweiten Mobilfunk-Endgerät übertragen. Auch bei dieser Ausführung ist natürlich ein Ausdruck und somit die Bereitstellung einer schriftlichen Bestellung bzw. Buchung über einen an das zweite Mobilfunk-Endgerät angeschlossenen Drucker möglich. Jedoch kann hier die Bestellnachricht direkt vom Display aus bearbeitet und - was insbesondere für mobile Kleinunternehmer ein wesentlicher Vorteil ist - praktisch an jedem Ort, unabhängig von einem Festnetzanschluß, angenommen werden. Es versteht sich, daß bei dieser Ausführung auch der Besteller praktisch von jedem beliebigen Ort aus aktiv werden kann.

Die letztgenannten Vorteile hat auch eine weitere Ausführung, bei der das Bestellformular im SMS-Textformat an einem als Besteller-Endgerät dienenden ersten Telekommunikations-Endgerät bereitgestellt und abgeschickt und die Bestellnachricht an einem als Anbieter-Endgerät dienenden zweiten Telekommunikations-Endgerät als SMS angezeigt und/oder ausgedruckt wird. Bei dem Endgerät kann es sich hierbei wieder um ein Mobilfunk-Endgerät, aber auch um ein modernes Schnurlostelefon an einem SMS-fähigen Festnetzanschluß handeln. Es versteht sich, daß auch ein drahtgebundenes Festnetz-Endgerät auf Besteller- und/oder Anbieterseite eingesetzt werden kann - allerdings dann ohne den oben angesprochenen Mobilitätsvorteil.

In einer weiteren alternativen Systemausführung wird das Bestellformular per Spracheingabe am Besteller-Endgerät ausgefüllt und/oder der Bestelldatensatz per Sprachsynthese in eine Sprachnachricht umgewandelt und per Sprachausgabe am Anbieter-Endgerät ausgegeben. Diese Ausführung ist wiederum eher als Zukunftslösung anzusehen, hat aber angesichts der zunehmenden Verbreitung der Sprachsteuerung bei modernen Endgeräten durchaus eine ernsthafte Perspektive.

Ein gewisser Nachteil besteht hierbei darin, daß - jedenfalls primär - keine Bestell- bzw. Buchungsnachricht in Textform vorliegt. Dieser Nachteil fällt aber speziell im Bereich des Kleingewerbes und von gastronomischen Lieferdiensten nicht ins Gewicht, weil dort auch gegenwärtig nicht mit schriftlichen Bestellungen gearbeitet wird. Ein wesentlicher Vorteil besteht in der besonderen Einfachheit der Bestellungs-Eingaben, speziell auch für ältere Menschen oder Kinder, und in der Einsetzbarkeit des Verfahrens mit einfachen analogen Telefonen. Zudem läßt sich auf der Anbieterseite die Bestellung leicht in einem herkömmlichen Anrufbeantworter speichern, sofern zum Zeitpunkt der Aufgabe der Bestellung niemand im Unternehmen persönlich erreichbar ist.

Vorteilhafterweise wird bei den oben erwähnten Ausführungsvarianten jeweils eine Menuführung für den Besteller implementiert sein, die eine einfache und fehlerfreie Aufgabe der Bestellung sicherstellt. Hierzu kann eine bereits weitgehend vorgegebene Ausfüllung des Bestellformulars - sei es als Word-Dokument, WML-File oder SMS-Textmuster - beitragen.

In einer weiteren sinnvollen Ausgestaltung wird der Bestelldatensatz im Ansprechen auf die Signalisierung eines Offline- oder Besetzt-Zustandes des Anbieter-Endgerätes im Kommunikationsnetz zwischen gespeichert und ein Steuerungsablauf zur Wiederholung der Übertragung zum Anbieter-Endgerät gestartet. Hierdurch wird dem Besteller das mehrfache Abschicken seiner Bestellung "von Hand" erspart und ein wichtiger Beitrag zur Akzeptanz des Bestellsystems seitens der Kunden geleistet.

Im Interesse einer dauerhaften Geschäftsbeziehung zwischen dem ersten und zweiten Anbieter wird bevorzugt mit der Bereitstellung der Bestellplattform durch den zweiten Anbieter dem ersten Anbieter ein URI, insbesondere URL, zugewiesen und auf dem Bestellformular vermerkt. Diese Ausgestaltung liegt im übrigen aber auch im Interesse der Kunden des ersten Anbieters, die hierdurch einen über längere Zeiträume verläßlichen Bestell- bzw. Buchungsweg geboten bekommen.

Vorteile und Zweckmäßigkeiten der Erfindung ergeben sich im übrigen aus den Unteransprüchen sowie der nachfolgenden Beschreibung bevorzugter Ausgestaltungen des vorgeschlagenen Systems anhand der Figuren. Von diesen zeigen:
- Fig. 1: eine synoptische, illustrative Darstellung des vorgeschlagenen Nachrichtenübertragungssystems mit bevorzugten Ausführungsvarianten und
- Fig. 2: eine schematische Darstellung eines bevorzugten Systemaufbaus zur Verdeutlichung des Zusammenwirkens der Funktionskomponenten und des Verfahrensablaufes.

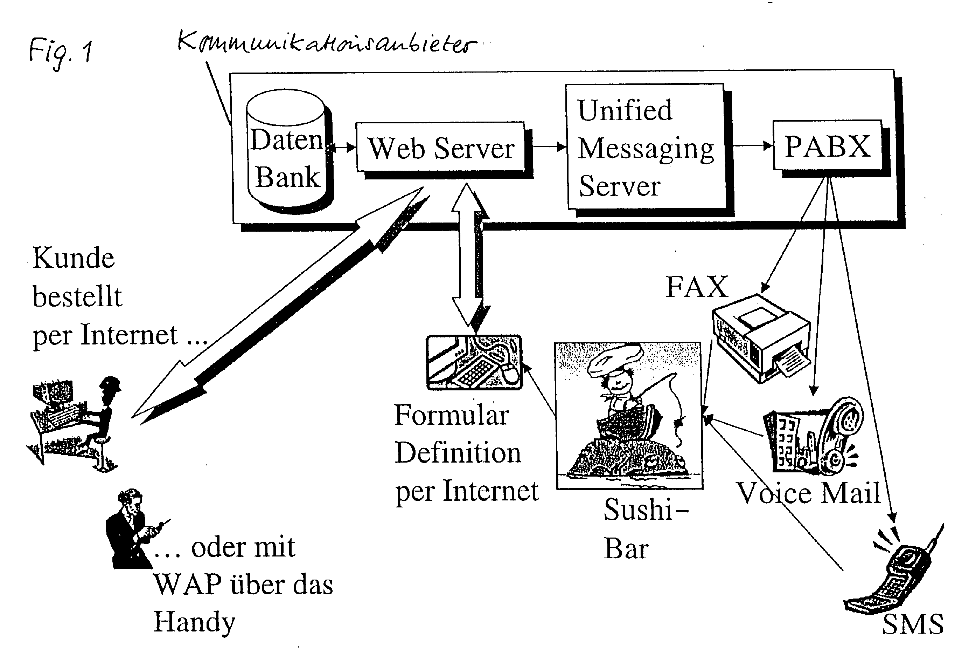

Fig. 1 zeigt am Beispiel einer Sushi-Bar als Waren- bzw. Dienstleistungsanbieter (erster Anbieter) anschaulich verschiedene bevorzugte Realisierungen des vorgeschlagenen Systems, welches durch einen Kommunikationsanbieter als zweiten Anbieter betrieben wird. Die Figur ist im Lichte der obigen allgemeinen Ausführungen selbsterklärend, so daß hier keine zusätzliche Beschreibung gegeben wird.

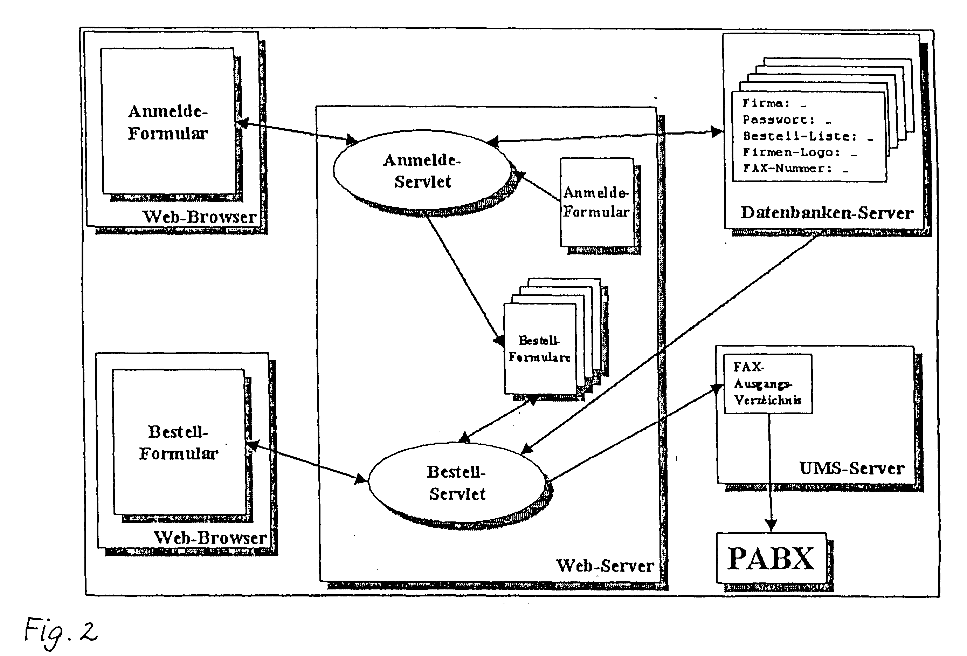

Fig. 2 zeigt ein bevorzugtes Anwendungsbeispiel im Überblick. Es besteht im wesentlichen aus folgenden Komponenten:
- einem handelsüblichen Web-Browser (z. B. Internet-Explorer, Netscape Navigator, etc.). Da Formulare verwendet werden, wird vorausgesetzt, daß der Browser in der Lage ist, HTML Dokumente in der Version 4.0 zu verarbeiten.
- einem Web-Server, der in der Lage ist, Servlets auszuführen. Das Anwendungsbeispiel ist so gestaltet, daß kein bestimmter Standard benutzt werden muß. Gängige Technologien wie z. B. ASP, JSP oder auch CGI-Skripte sind problemlos einsetzbar.
- einem Datenbanken-Server, der eine relationale Datenbank zur Verfügung stellt. Auch hier werden keine besonderen Ansprüche an die Datenbank gestellt.
- einem Unified-Messaging-Server (UMS-Server). Dieser wird nur zum Versenden von Faxen benötigt. Ein wichtiges Feature dabei ist, daß zusammen mit dem zu versendenden Dokument auch die Faxnummer des Empfangsgeräts bereitgestellt werden kann (z. B. im Dateinamen des Dokuments).

Im folgenden werden die zwei grundlegenden Arbeitsabläufe (Eingabe der Bestell-Liste, Aufgeben der Bestellung) für dieses System beschrieben.
A. Eingabe der Bestell-Liste durch den Anbieter
   1. Der Anbieter ruft mit Hilfe seines Web-Browsers das Anmeldeformular vom Web-Server ab. Falls er das System bereits benutzt hat, gibt er dazu den Firmen-Namen und sein selbst definiertes Paßwort an, ansonsten ruft er ein leeres Formular ab.
   2. a) Falls ein Firmenname angegeben wurde, holt das Anmelde-Servlet des Web-Servers die entsprechenden Daten aus dem Datenbank-Server und füllt damit ein generisches Anmelde-Formular, das auf dem Web-Server gespeichert ist, und schickt es an den Web-Browser zurück. b) Falls kein Firmenname angegeben wurde, schickt das Anmelde-Servlet ein leeres Anmelde-Formular an den Web-Browser zurück.
   3. Der Anbieter füllt das Anmeldeformular mit Daten. Sobald die Submit-Funktion des Formulars ausgeführt wurde (z. B. über den entsprechenden Button des Formulars), werden die Daten des Formulars an das Anmelde-Servlet zurückgeschickt.
   4. Das Anmelde-Servlet speichert die Daten des Formulars in einem Eintrag im Datenbank-Server und generiert außerdem ein Bestell-Formular speziell für Kunden des Anbieters. Dieses wird unter dem für den Anbieter auf dem Web-Server reservierten URL gespeichert. Das URL wird zur Information für den Anbieter zu dessen Web-Browser übertragen und dort angezeigt.
B. Eingabe einer Bestellung eines Kunden
   1. Der Kunde ruft mit Hilfe seines Web-Browsers unter dem URL des Anbieters dessen Bestell-Formular ab.
   2. Das Bestell-Servlet sucht anhand des URLs das entsprechende Bestell-Formular heraus und schickt es an den Web-Browser.
   3. Der Kunde füllt das Bestell-Formular aus. Sobald die Submit-Funktion des Formulars ausgeführt wurde (z.B. über den entsprechenden Button des Formulars) werden die Daten des Formulars an das Bestell-Servlet zurückgeschickt.
   4. Das Bestell-Servlet sucht aus dem Datenbank-Server die Fax-Nummer des Anbieters heraus, erstellt aus den Bestelldaten des Kunden ein Dokument und legt dieses zusammen mit der Faxnummer des Anbieters im Fax-Ausgangsverzeichnis des UMS-Servers ab.
   5. Der UMS-Server prüft in regelmäßigen Abständen das Fax-Ausgangsverzeichnis und verschickt die dort abliegenden Dokumente als FAX an die zugehörigen Faxnummern.

Die Ausführung der Erfindung ist nicht auf die oben hervorgehobenen Varianten und Aspekte und den beispielhaft beschriebenen Verfahrensablauf beschränkt, sondern ebenso in einer Vielzahl von Abwandlungen möglich, die im Rahmen fachgemäßen Handelns liegen.

## Patentansprüche

1. Internet-gestütztes Nachrichtenübertragungsverfahren zur Übermittlung einer Bestell- oder Buchungsnachricht von einem Besteller-Endgerät eines Bestellers an ein Anbieter-Endgerät eines ersten Anbieters einer Ware oder Dienstleistung, der keine eigene Internetseite unterhält, in einem Kommunikationsnetz, wobei
der erste Anbieter eine Internetseite eines zweiten Anbieters eines Kommunikationsdienstes als Bestellplattform nutzt, indem er dort ein virtuelles Bestellformular und wahlweise Zusatzinformationen offeriert,
der Besteller vom Besteller-Endgerät aus das Bestellformular aufruft, ausfüllt und abschickt,
ein das ausgefüllte Bestellformular repräsentierender Bestelldatensatz von einem Netzserver des zweiten Anbieters mittelbar oder unmittelbar an das Anbieter-Endgerät übermittelt und
am Anbieter-Endgerät die Bestell- oder Buchungsnachricht aus dem Bestelldatensatz erzeugt und ausgegeben wird.

2. Nachrichtenübertragungsverfahren nach Anspruch 1,
**dadurch gekennzeichnet, daß**
der Bestelldatensatz im HTML-, XML- oder WML-Format an einen Unified-Messaging-Server übertragen, durch diesen in eine Faxnachricht umgewandelt und an einem als Anbieter-Endgerät dienenden Faxgerät ausgegeben wird.

3. Nachrichtenübertragungsverfahren nach Anspruch 1,
**dadurch gekennzeichnet, daß**
das Bestellformular im WML-Format an einem als Besteller-Endgerät dienenden ersten Mobilfunk-Endgerät bereitgestellt, ausgefüllt und abgeschickt und zu einem als Anbieter-Endgerät dienenden zweiten Mobilfunk-Endgerät übertragen wird.

4. Nachrichtenübertragungsverfahren nach Anspruch 1,
**dadurch gekennzeichnet, daß**
das Bestellformular im SMS-Textformat an einem als Besteller-Endgerät dienenden ersten Telekommunikations-Endgerät bereitgestellt und abgeschickt und die Bestellnachricht an einem als Anbieter-Endgerät dienenden zweiten Telekommunikations-Endgerät als SMS angezeigt und/oder ausgedruckt wird.

5. Nachrichtenübertragungsverfahren nach Anspruch 1,
**dadurch gekennzeichnet, daß**
das Bestellformular per Spracheingabe am Besteller-Endgerät ausgefüllt und/oder der Bestelldatensatz per Sprachsynthese in eine Sprachnachricht umgewandelt und per Sprachausgabe am Anbieter-Endgerät ausgegeben wird.

6. Nachrichtenübertragungsverfahren nach einem der vorangehenden Ansprüche,
**dadurch gekennzeichnet, daß**
der Bestelldatensatz im Ansprechen auf die Signalisierung eines Offline- oder Besetzt-Zustandes des Anbieter-Endgerätes im Kommunikationsnetz zwischengespeichert und ein Steuerungsablauf zur Wiederholung der Übertragung zum Anbieter-Endgerät gestartet wird.

7. Nachrichtenübertragungsverfahren nach einem der vorangehenden Ansprüche,
**dadurch gekennzeichnet, daß**
mit der Bereitstellung der Bestellplattform durch den zweiten Anbieter dem ersten Anbieter ein URI, insbesondere URL, zugewiesen und auf dem Bestellformular vermerkt wird.

8. Nachrichtenübertragungsanordnung zur Internet-gestützten Übermittlung einer Bestell- oder Buchungsnachricht zur Bestellung bzw. Buchung einer Ware oder Dienstleistung bei einem ersten Anbieter durch einen Besteller in einem Kommunikationsnetz, mit
einem an das Kommunikationsnetz angeschlossenen Besteller-Endgerät,
einem an das Kommunikationsnetz angeschlossenen Anbieter-Endgerät des ersten Anbieters und
einem im Kommunikationsnetz stehenden Netzserver des zweiten Anbieters, auf dem Mittel zur Implementierung einer Bestellplattform eines Kommunikationsdienstes, speziell zur Bereitstellung eines virtuellen Bestellformulars und wahlweise von Zusatzinformationen, implementiert sind.

9. Nachrichtenübertragungsanordnung nach Anspruch 8,
**dadurch gekennzeichnet, daß**
das Besteller-Endgerät als Datenendgerät oder IPnetzfähiges Telekommunikations-Endgerät zur Erzeugung des Bestelldatensatzes im HTML-, XML- oder WML-Format ausgebildet ist, der Netzserver ausgangssseitig mit einem Unified-Messaging-Server zur Umwandlung des Bestelldatensatzes in eine Faxnachricht verbunden ist und
das Anbieter-Endgerät als Faxgerät ausgebildet ist.

10. Nachrichtenübertragungsanordnung nach Anspruch 8,
**dadurch gekennzeichnet, daß**
das Besteller-Endgerät und/oder das Anbieter-Endgerät als WAP-fähiges Mobilfunk-Endgerät ausgebildet sind.

11. Nachrichtenübertragungsanordnung nach Anspruch 8,
**dadurch gekennzeichnet, daß**
das Besteller-Endgerät und/oder das Anbieter-Endgerät als Telekommunikations-Endgerät mit Mitteln zur Eingabe bzw. Ausgabe von Textnachrichten im SMS-Format ausgebildet sind.

12. Nachrichtenübertragungsanordnung nach Anspruch 8,
**dadurch gekennzeichnet, daß**
das Besteller-Endgerät und/oder das Anbieter-Endgerät als Telekommunikations- oder Datenendgerät mit Mitteln zur Spracheingabe bzw. Sprachausgabe ausgebildet sind.

13. Nachrichtenübertragungsanordnung nach einem der Ansprüche 8 bis 12,
**dadurch gekennzeichnet, daß**
der Netzserver zur Implementierung einer Menüführung am Besteller-Endgerät zur interaktiven Erstellung der Bestell- bzw. Buchungsnachricht ausgerüstet ist.

14. Nachrichtenübertragungsanordnung nach einem der Ansprüche 8 bis 13,
**dadurch gekennzeichnet, daß**
dem Netzserver ein Zwischenspeicher zur Speicherung des Bestelldatensatzes sowie Erfassungsmittel zur Erfassung eines Offline- oder Besetzt-Zustandes des Anbieter-Endgerätes und mit den Erfassungsmitteln verbundene Steuerungsmittel zur Steuerung der Zwischenspeicherung sowie einer Wiederholung der Übertragung zum Anbieter-Endgerät zugeordnet sind.
